# EUROPÄISCHE PATENTSCHRIFT

(11) **EP 2 853 783 B1**
(45) Veröffentlichungstag und Bekanntmachung des Hinweises auf die Patenterteilung: **23.08.2017**
(21) Anmeldenummer: 14185043.8
(22) Anmeldetag: 17.09.2014
(51) Int. Cl.: F16J 15/3288

(54) **Bürstendichtung und Verfahren zur Herstellung einer Bürstendichtung**
Brush seal and method of forming a brush seal
Ensemble joint-brosse et procédé de fabrication d'un ensemble joint-brosse

(30) Priorität: 20.09.2013 DE 102013218913
(43) Veröffentlichungstag der Anmeldung: 01.04.2015
(73) Patentinhaber: MTU Aero Engines AG, 80995 München (DE)
(72) Erfinder: Cernay, Christoph, 83052 Bruckmühl (DE); Dr. Pröstler, Stephan, 82266 Inning a. Ammersee (DE); Schmidmayr, Wolfgang, 80539 München (DE); Weber, Julian, 80797 München (DE); Großkurth, Benjamin, 80804 München (DE); Beichl, Stefan, 82211 Herrsching (DE)

(56) Entgegenhaltungen:
- EP-A1- 2 204 548
- DE-A1- 19 937 932
- GB-A- 2 070 700
- US-A1- 2007 187 900
- US-A1- 2009 072 486

## Beschreibung

Die Erfindung betrifft eine Bürstendichtung, insbesondere zur Abdichtung von in Strömungsmaschinen auftretenden Spalten, umfassend eine Vielzahl von Einzelfasern, Einzeldrähten oder Bündeln aus Einzelfasern oder -drähten. Die Erfindung betrifft weiterhin ein Verfahren zur Herstellung einer Bürstendichtung sowie ein Bauteil umfassend mindestens eine Bürstendichtung.

Bürstendichtungen der eingangs genannten Art sind in einer großen Vielzahl bekannt und werden beispielsweise bei Strömungsmaschinen eingesetzt, um den Zwischenraum zwischen statischen und rotierenden Bauteilen gegen Leckage des Strömungsmediums abzudichten. Es gibt es Vielzahl von Anwendungsfällen, in welchen zwei relativ zueinander rotierende Teile, wie etwa ein Stator und ein Rotor, nicht-hermetisch gegeneinander abzudichten sind. Ein derartiger Anwendungsfall ist zum Beispiel die Abdichtung eines gasdurchströmten, ringförmigen Spalts zwischen dem Gehäuse und dem Rotor einer Gasturbine für ein Flugzeug. Zur nicht-hermetischen Abdichtung ringförmiger Zwischenräume zwischen relativ zueinander rotierenden Baugruppen werden dabei häufig Bürstendichtungen verwendet, da Bürstendichtungen bei gleicher Dichtwirkung leichter und kompakter sind als Labyrinthdichtungen. Eine entsprechende Bürstendichtung ist z. B. in der DE 195 27 605 A1 oder in der US2007/0187900 A1 beschrieben. Der Einsatz von Bürstendichtungen erlaubt daher die Optimierung der konstruktiven Auslegung von Rotoren und Gehäusen. Vor allem im Triebwerksbau erzielt man durch diese Bauraumreduzierung signifikante Kosten- und Gewichtseinsparungen. Verfahren zur Herstellung von Bürstendichtungen sind in der DE 36 06 284 C2 und der EP 0 211 275 A2 beschrieben. Problematisch ist jedoch, dass bei der Verwendung von relativ dünnen Einzelfasern, insbesondere bei der Verwendung von entsprechenden Kunststofffasern, es aufgrund der geringen Einzelsteifigkeit der Fasern nicht möglich ist, Bürstendichtungen mit längeren Borsten zur Überbrückung größerer Spalte zwischen den abzudichtenden Bauelementen herzustellen. Bekannte Bürstendichtungen, insbesondere mit relativ dünnen Borsten können daher nicht im Bereich hoher Relativbewegungen eingesetzt werden.

Aufgabe der vorliegenden Erfindung ist es daher, eine Bürstendichtung der eingangs genannten Art bereitzustellen, die für den Einsatz in Bereichen großer Relativbewegungen von Bauteilen zueinander geeignet ist. Eine weitere Aufgabe der Erfindung ist es, eine geeignetes Verfahren zur Herstellung dieser Bürstendichtung bereitzustellen.

Die Aufgaben werden erfindungsgemäß durch eine Bürstendichtung gemäß Anspruch 1 sowie durch ein Verfahren gemäß Anspruch 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Bürstendichtung als vorteilhafte Ausgestaltungen des Verfahrens und umgekehrt anzusehen sind.

Eine erfindungsgemäße Bürstendichtung, insbesondere zur Abdichtung von in Strömungsmaschinen auftretenden Spalten, umfasst eine Vielzahl von Einzelfasern, Einzeldrähten oder Bündeln aus Einzelfasern oder -drähten, wobei jeweils mindestens zwei Einzelfasern oder -drähte und/oder mindestens zwei Faser- oder Drahtbündel zu einem Faser- oder Drahtpaket verflochten oder verdrillt sind. Das Verflechten oder Verdrillen von einzelnen Fasern, Drähten oder Bündeln aus Einzelfasern oder -drähten zu einer Art Feingeflecht führt zu Faser- oder Drahtpaketen, die eine deutlich höhere Steifigkeit als die entsprechenden Einzelfasern, -drähte oder Bündel aufweisen. Das Faser- oder Drahtbündel besteht dabei aus mindestens zwei miteinander verflochtenen oder verdrillten Einzelfasern oder Einzeldrähten. Zudem können als Material für die Einzelfasern Kunststoff, Keramik und/oder Kohlenstoff sowie Metall oder eine Metall-Legierung verwendet werden. Insbesondere können die Einzelfasern aus einem Polyamid, wie zum Beispiel Aramid bestehen. Hierbei ergibt sich ein weiterer Vorteil, dass nämlich längere Borsten aus Materialien mit einer geringen Steifigkeit, wie zum Beispiel sehr dünne Aramidfasern mit einem Durchmesser in einem Bereich von 0,01 mm auch für Bürstendichtungen mit längeren Borsten verwendet werden können. Dadurch ergeben sich für die erfindungsgemäße Bürstendichtung neue Einsatzgebiete in statischen und dynamischen Anwendungen, die bisher aufgrund der zu großen Relativbewegungen der Bauteile zueinander nicht möglich waren. Einsatzgebiete der erfindungsgemäßen Bürstendichtung betreffen insbesondere den Einsatz in Luftfahrttriebwerken, Industriegasturbinen, Dampfturbinen, Industrieverdichtern oder auch vielen anderen Maschinenbauanwendungen.

In einer weiteren vorteilhaften Ausgestaltung der erfindungsgemäßen Bürstendichtung beträgt der Durchmesser des Faser- oder Tragpakets zwischen 0,05 und 2,0 mm. Die sich daraus ergebende Eigensteifigkeit der Faser- und Drahtpakete ermöglicht die genannte Verwendung längerer Fasern bzw. Borsten aus Materialien mit einer geringeren Steifigkeit.

In weiteren vorteilhaften Ausgestaltungen der erfindungsgemäßen Bürstendichtung sind eine Vielzahl von Faser- und Drahtpaketen zumindest teilweise innerhalb eines Bürstendichtungsgehäuses angeordnet. Dabei können die Faser- oder Drahtpakete um einen Kerndraht gewickelt und mittels eines Klemmrohrs an diesem fixiert sein, wobei das Klemmrohr innerhalb des Bürstendichtungsgehäuses angeordnet ist. Zudem besteht die Möglichkeit, dass das Bürstendichtungsgehäuse zweiteilig ausgebildet ist. Die erfindungsgemäße Bürstendichtung kann in einer Vielzahl unterschiedlicher Varianten ausgebildet sein, die sich an den Anforderungen, insbesondere die geforderten Dichtungseigenschaften orientieren.

Ein weiterer Aspekt der vorliegenden Erfindung betrifft ein erfindungsgemäßes Verfahren zur Herstellung einer Bürstendichtung, wobei das Verfahren folgende Verfahrensschritte umfasst: Bereitstellung von Einzelfasern, Einzeldrähten oder Bündeln aus Einzelfasern oder -drähten; Verflechten oder Verdrillen von jeweils mindestens zwei Einzelfasern oder Drähten und/oder mindestens zwei Faserbündeln oder Drahtbündeln zu einem Faser- oder Drahtpaket; Anordnen einer Vielzahl von Fasern- oder Drahtpaketen zumindest teilweise innerhalb eines Bürstendichtungsgehäuses; und Zuschneiden der Faser- oder Drahtpakete. Statt der üblicherweise verwendeten Einzelfasern werden erfindungsgemäß die verflochtenen oder verdrillten Faser- oder Drahtpakete zur Herstellung von Bürstendichtungen verwendet. Dadurch ist es möglich, relativ dünne Fasern einzusetzen, die bisher nur für Bürstendichtungen mit kleinen Faserlängen von ca. 3 bis 6 mm verwendet werden konnten. Längere Einzelfasern würden aufgrund ihrer geringen Eigensteifigkeit nach dem Einfedern nicht mehr ausfedern. Nach dem entsprechenden Anordnen der Faser- oder Drahtbündel in dem Bürstendichtungsgehäuse können die Faserpakete entsprechend der benötigten Längen zugeschnitten werden. Die Faserpakete können aber auch mit vorbestimmten und bereits vorgefertigten Faserlängen hergestellt werden. Mit dem erfindungsgemäßen Verfahren ist es nunmehr möglich, Bürstendichtungen herzustellen, die für den Einsatz in Bereichen großer Relativbewegungen von Bauteilen zueinander geeignet sind.

In vorteilhaften Ausgestaltungen des erfindungsgemäßen Verfahrens werden vor dem Schritt des Anordnens der Faser- oder Drahtpakete innerhalb des Bürstendichtungsgehäuses diese um einen Kerndraht gewickelt und mittels eines Klemmrohrs an diesem fixiert. Diese Konstruktion gewährleistet einen formschlüssigen und sicheren Halt der Fasern innerhalb des Bürstendichtungsgehäuses.

Erfindungsgemäß bestehen die eingesetzten Faser- oder Drahtbündel aus mindestens zwei miteinander verflochtenen oder verdrillten Einzelfasern oder Einzeldrähten. Zudem können die Einzelfasern aus Kunststoff, Keramik, Kohlenstoff, Metall oder Metall-Legierungen bestehen.

Ein weiterer Aspekt der vorliegenden Erfindung betrifft ein Bauteil einer Strömungsmaschine umfassend mindestens eine im Vorhergehenden beschriebene Bürstendichtung. Aufgrund der genannten vorteilhaften Eigenschaften der erfindungsgemäßen Bürstendichtung kann diese auch zur Überbrückung größerer Spalte, das heißt zum Beispiel Spalte größer 0,5 mm eingesetzt werden.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
Fig. 1 eine schematische Darstellung eines Teilbereichs der erfindungsgemäßen Bürstendichtung; und
Fig. 2 eine schematische, teilweise geschnittene Darstellung einer erfindungsgemäßen Bürstendichtung.

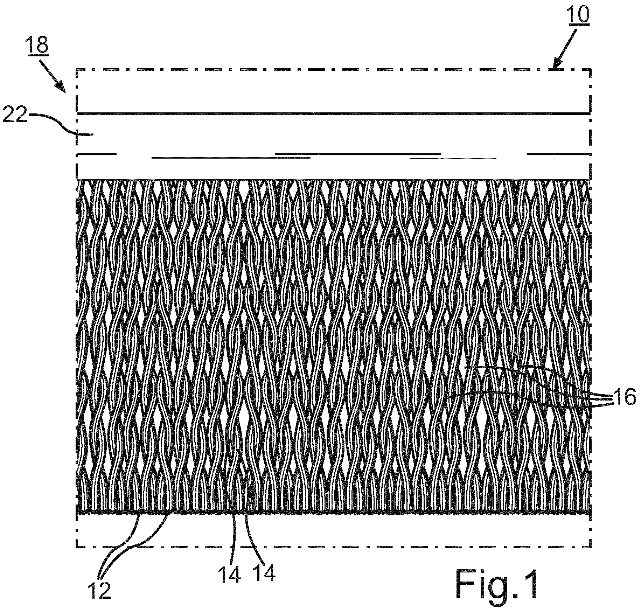

Fig. 1 zeigt eine schematische Darstellung eines Teilbereichs einer Bürstendichtung 10. Die Bürstendichtung 10 dient insbesondere zur Abdichtung von in Strömungsmaschinen auftretenden Spalten. Man erkennt, dass die Bürstendichtung 10 aus einer Vielzahl von Einzelfasern 12 besteht, die jeweils zu einem Faserbündel 14 angeordnet sind. Dabei liegen die Einzelfasern 12 ungefähr parallel aneinander. Die Faserbündel 14 sind wiederum miteinander zu einem Faserpaket 16 verflochten beziehungsweise verdrillt. In dem dargestellten Ausführungsbeispiel sind in der einfachsten Ausgestaltung und zur besseren Darstellung zwei einzelne Faserbündel 14 zu jeweils einem Faserpaket 16 verdrillt. Es besteht natürlich auch die Möglichkeit, dass drei, vier, fünf oder eine Vielzahl von Faserpaketen 16 zur Ausbildung eines Feingeflechts miteinander verflochten oder verdrillt sind. Des Weiteren besteht die Möglichkeit, dass eine Vielzahl von Einzelfasern zu entsprechenden Faserbündeln direkt verflochten oder verdrillt sind.

Die Einzelfasern 12 bestehen aus Kunststoff, nämlich einem aromatischen Polyamid, nämlich einem Aramid. Der Durchmesser dieser Einzelfasern 12 beträgt ca. 0,01 mm. Die dargestellten Aramidfasern 12 weisen eine relativ geringe Eigensteifigkeit auf, sodass mit den dargestellten Einzelfasern 12 bisher nur Bürstendichtungen mit kleinen, das heißt ca. 3 bis 6 mm Faserlängen realisiert werden konnten. Mit der dargestellten Bürstendichtung 10 können nunmehr Dichtungen mit deutlich größeren Faserlängen zur Überbrückung relativ großer Spalte verwirklicht werden. Das Verflechten der einzelnen Faserbündel 14 beziehungsweise Einzelfasern 12 zu dem Faserpaket 16 ergibt deutlich höhere Steifigkeiten der Faserpakete 16. Dabei können ca. 6500 bis 8500 Einzelfasern pro Millimeter Durchmesser miteinander verflochten werden. Durch diese im Vergleich zur herkömmlichen Bürstendichtung deutlich höhere Belegungsdichte ergibt sich die bereits erwähnte höhere Steifigkeit des Faserpakets 16. Der Durchmesser der in dem dargestellten Ausführungsbeispiel verwendeten einzelnen Faserpakete 16 beträgt ca. 700 µm. Des Weiteren besteht die Möglichkeit, dass neben Kunststoff auch Keramik oder Kohlenstoff oder auch Metall oder Metall-Legierungen zur Herstellung der Einzelfasern 12 verwendet werden. Sollten Einzelfasern aus Metall verwendet werden, so können beispielsweise vier Einzelfasern mit jeweils einem Durchmesser von 0,2 mm zu einem Drahtpaket verflochten oder verdrillt werden. Übliche Faser- oder Drahtpakete 16 weisen einen Durchmesser von ca. 0,05 bis 2,0 mm auf.

Des Weiteren erkennt man, dass die Faserpakete 16 teilweise innerhalb eines Bürstendichtungsgehäuses 18 angeordnet sind. Das Bürstendichtungsgehäuse 18 umfasst dabei ein Klemmrohr 22, in dem die einzelnen Faserpakete 16 fixiert sind.

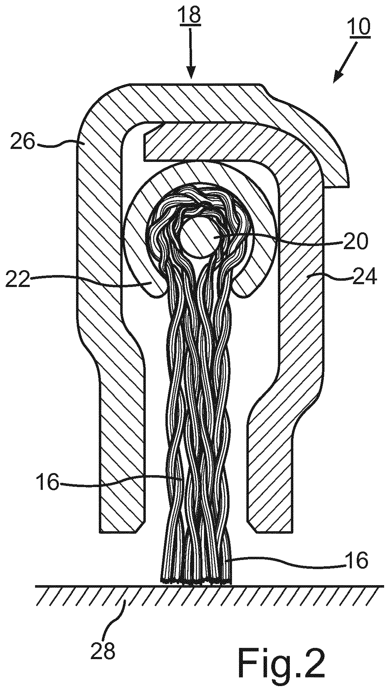

Fig. 2 zeigt eine schematische, teilweise geschnittene Darstellung der Bürstendichtung 10. Im Unterschied zur Fig. 1 ist hierbei die Ausgestaltung des Bürstendichtungsgehäuses 18 und die Anordnung der Faserpakete 16 innerhalb des Bürstendichtungsgehäuses 18 dargestellt. Zur vereinfachten Darstellung sind in Figur 2 nur zwei Faserbündel 16 dargestellt. Man erkennt, dass die Faserbündel 16 in verflochtenem oder verdrilltem Zustand um einen Kerndraht 20 gewickelt sind. Die Bürstendichtung 10 umfasst natürlich nicht nur zwei um den Kerndraht gewickelte Faserbündel 16, sondern eine Vielzahl von Faserbündeln 16, die nebeneinander aber auch übereinander gewickelt sein können.

Des Weiteren erkennt man, dass das Bürstendichtungsgehäuse 18 zweiteilig ausgebildet ist. Dabei besteht das Bürstendichtungsgehäuse 18 aus einem Stützring 24, der ein Durchbiegen der Faserpakete 16 in axialer Richtung verhindert. Mit dem Stützring 24 ist ein Deckring 26 verbunden, der störende Strömungseinflüsse auf die in Strömungsrichtung des Strömungsmediums vorne liegenden Faserpakete 16 abhalten soll. Der Deckring 26 und der Stützring 24 bilden einen Aufnahmeraum für die Aufnahme eines Klemmrohrs 22 aus. Die Faserpakete 16 sind dabei ungefähr kreisförmig um den Kerndraht 20 gewickelt. Mittels des Klemmrohrs 22 werden die Faserpakete 16 an dem Kerndraht 20 fixiert. Das Klemmrohr 22 ist innerhalb des Bürstendichtungsgehäuses 18 angeordnet. Man erkennt, dass die außerhalb der Bürstendichtung 10 angeordneten Enden der Faserpakete 16 an einem rotierenden Bauelement 28 anliegen und den zwischen dem rotierenden Bauteil 28 und einem weiteren Bauteil (nicht dargestellt), in dem die Bürstendichtung 10 angeordnet ist, ausgebildeten Spalt abdichten.

## Patentansprüche

1. Bürstendichtung (10), insbesondere zur Abdichtung von in Strömungsmaschinen auftretenden Spalten, umfassend eine Vielzahl von Bündeln (14) aus Einzelfasern oder - drähten, wobei jeweils mindestens zwei Faserbündel (14) oder Drahtbündel zu einem Faser- oder Drahtpaket (16) verflochten oder verdrillt sind,
**dadurch gekennzeichnet, dass** das Faser- oder Drahtbündel (14) aus mindestens zwei miteinander verflochtenen oder verdrillten Einzelfasern (12) oder Einzeldrähten besteht.

2. Bürstendichtung (10) nach Anspruch 1,
**dadurch gekennzeichnet, dass** die Einzelfasern aus Kunststoff, Keramik und/oder Kochlenstoff und die Einzeldrähte aus Metall oder einer Metall-Legierung bestehen.

3. Bürstendichtung (10) nach Anspruch 2,
**dadurch gekennzeichnet, dass** die Einzelfasern aus einem Polyamid bestehen.

4. Bürstendichtung (10) nach einem der vorhergehenden Ansprüche,
**dadurch gekennzeichnet, dass** der Durchmesser des Faser- oder Drahtpakets (16) zwischen 0,05 und 2,0 mm beträgt.

5. Bürstendichtung (10) nach einem der vorhergehenden Ansprüche,
**dadurch gekennzeichnet, dass** eine Vielzahl von Faser- oder Drahtpaketen (16) zumindest teilweise innerhalb des Bürstendichtungsgehäuses (18) angeordnet sind.

6. Bürstendichtung (10) nach Anspruch 5,
**dadurch gekennzeichnet, dass** die Faser- oder Drahtpakete (16) um einen Kerndraht (20) gewickelt und mittels eines Klemmrohrs (22) an diesem fixiert sind, wobei das Klemmrohr (22) innerhalb des Bürstendichtungsgehäuses (18) angeordnet ist.

7. Bürstendichtung (10) nach Anspruch 5 oder 6,
**dadurch gekennzeichnet, dass** das Bürstendichtungsgehäuse (18) zweiteilig ausgebildet ist.

8. Verfahren zur Herstellung einer Bürstendichtung (10) umfassend folgende Verfahrensschritte:
- Bereitstellung von Bündeln (14) aus Einzelfasern oder -drähten;
- Verflechten oder Verdrillen von jeweils mindestens zwei Faserbündeln (14) oder Drahtbündeln zu einem Faser- oder Drahtpaket (16); und
- Anordnen einer Vielzahl von Faser- oder Drahtpaketen (16) zumindest teilweise innerhalb eines Bürstendichtungsgehäuses (18),
**dadurch gekennzeichnet, dass** das Faser- oder Drahtbündel (14) aus mindestens zwei miteinander verflochtenen oder verdrillten Einzelfasern (12) oder Einzeldrähten besteht.

9. Verfahren nach Anspruch 8,
**dadurch gekennzeichnet, dass** vor dem Schritt des Anordnens der Faser- oder Drahtpakete (16) innerhalb des Bürstendichtungsgehäuses (18) die Faser- oder Drahtpakete (16) um einen Kerndraht (20) gewickelt und mittels eines Klemmrohr (22) an diesem fixiert werden.

10. Verfahren nach einem der Ansprüche 8 oder 9,
**dadurch gekennzeichnet, dass** die Einzelfasern (12) aus Kunststoff, Keramik und/oder Kohlenstoff und die Einzeldrähte aus Metall oder einer Metall-Legierung bestehen.

11. Verfahren nach einem der Ansprüche 8 bis 10,
**dadurch gekennzeichnet, dass** vor oder nach dem zumindest teilweise Anordnen der Faser- oder Drahtpakete (16) in dem Bürstendichtungsgehäuse (18) ein Zuschneiden der Faser- oder Drahtpakete (16) erfolgt.

12. Bauteil einer Strömungsmaschine umfassend mindestens eine Bürstendichtung (10) nach einem der Ansprüche 1 bis 7.

## Claims

1. A brush seal (10), in particular, for the sealing of gaps occurring in turbomachines, the brush seal comprising a plurality of bundles (14) of individual fibers or wires, wherein, in each case, at least two individual fibers or wires, and/or at least two fiber bundles (14) or wire bundles are braided or twisted into a fiber or wire package (16), **characterized in that** the fiber or wire bundles (14) are composed of at least two individual fibers (12) or individual wires that have been braided or twisted together.

2. The brush seal (10) according to claim 1,
**characterized in that** the individual fibers are composed of plastics, ceramics, and/or carbon, and the individual wires are composed of metal or a metal alloy.

3. The brush seal (10) according to claim 2, **characterized in that** the individual fibers are composed of a polyamide,

4. The brush seal (10) according to any of the preceding claims,
**characterized in that** the diameter of the fiber or wire package (16) is between 0.05 and 2.0 mm.

5. The brush seal (10) according to any of the preceding claims,
**characterised in that** a plurality of fiber or wire packages (16) are arranged at least partially inside of a brush seal housing (18).

6. The brush seal (10) according to claim 5,
**characterized in that** the fiber or wire packages (16) are wound around a core wire (20) and are fastened thereto by means of a clamping tube (22), the clamping tube (22) being arranged inside of the brush seal housing (18).

7. The brush seal (10) accordíng to claim 5 or 6,
**characterized in that** the brush seal housing (18) is formed in two parts.

8. A method for producing a brush seal (10), the method comprising the following steps:
• providing bundles (14) of individual fibers or wires;
• in each case, braiding or twisting at least two fiber bundles (14) or wire bundles into a fiber or wire package (16); and
• arranging a plurality of fiber or wire packages (16) at least partially inside of a brush seal housing (18);
**characterized in that** the fiber or wire bundles (14) are composed of at least two individual fibers (12) or individual wires that have been braided or twisted together.

9. The method according to claim 8,
**characterized in that**, prior to the step of arranging the fiber or wire packages (16) inside of the brush seal housing (18), the fiber or wire packages (16) are wound around a core wire (20) and fastened thereto by means of a clamping tube (22).

10. The method according to claim 8 or 9,
**characterized in that** the individual fibers (12) are composed of plastics, ceramics, and/or carbon, and the individual wires are composed of metal or a metal alloy,

11. The method according to any of claims 8 to 10,
**characterized in that**, before or after the at least partial arrangement of the fiber or wire packages (16) in the brush seal housing (18), the fiber or wire packages (16) are cut.

12. A component of a turbomachine, comprising at least one brush seal (10) according to any of claims 1 to 7.

## Revendications

1. Joint étanche à balais (10), en particulier pour étanche des entrefers intervenant dans des turbomachines, comprenant une pluralité de faisceaux (14) de fibres ou de fils individuels, dans lequel respectivement au moins deux faisceaux de fibres (14) ou faisceaux de fils sont entrelacés ou torsadés en un paquet de fibres ou de fils (16), **caractérisé en ce que** le faisceau de fibres ou de fils (14) est constitué d'au moins deux fibres individuelles (12) ou fils individuels entrelacé(e)s ou torsadé(e)s l'un(e) avec l'autre.

2. Joint étanche à balais (10) selon la revendication 1,
**caractérisé en ce que** les fibres individuelles sont constituées d'une matière plastique, d'une céramique et/ou de carbone et les fils individuels d'un métal ou d'un alliage métallique.

3. Joint étanche à balais (10) selon la revendication 2,
**caractérisé en ce que** les fibres individuelles sont constituées d'un polyamide.

4. Joint étanche à balais (10) selon l'une quelconque des revendications précédentes,
**caractérisé en ce que** le diamètre du paquet de fibres ou de fils (16) se situe entre 0,05 et 2,00 mm.

5. Joint étanche à balais (10) selon l'une quelconque des revendications précédentes,
**caractérisé en ce qu'**une pluralité de paquets de fibres ou de fils (16) est agencée au moins en partie à l'intérieur de l'étui (18) du joint étanche à balais.

6. Joint étanche à balais (10) selon la revendication 5,
**caractérisé en ce que** les paquets de fibres ou de fils (16) sont enroulés autour d'un fil central (20) et sont fixés à celui-ci au moyen d'un tuyau de serrage (22), dans lequel le tuyau de serrage (22) est agencé à l'intérieur de l'étui (18) du joint étanche à balais.

7. Joint étanche à balais (10) selon la revendication 5 ou 6,
**caractérisé en ce que** l'étui (18) du joint étanche à balais est formé de deux parties.

8. Procédé de fabrication d'un joint étanche à balais (10) comprenant les étapes de procédé consistant à :
- préparer des faisceaux (14) à partir de fibres ou de fils individuels ;
- entrelacer ou torsader respectivement au moins deux faisceaux de fibres (14) ou faisceaux de fils en un paquet de fibres ou de fils (16); et
- agencer une pluralité de paquets de fibres ou de fils (16) au moins en partie à l'intérieur d'un étui (18) du joint étanche à balais, **caractérisé en ce que** le faisceau de fibres ou de fils (14) est constitué d'au moins deux fibres individuelles (12) ou fils individuels entrelacé(e)s ou torsadé(e)s l'un(e) avec l'autre.

9. Procédé selon la revendication 8,
**caractérisé en ce que,** avant l'étape d'agencement des paquets de fibres ou de fils (16) à l'intérieur de l'étui (18) du joint étanche à balais, les paquets de fibres ou de fils (16) sont enroulés autour d'un fil central (20) et fixés à celui-ci au moyen d'un tube de serrage (22).

10. Procédé selon l'une quelconque des revendications 8 ou 9,
**caractérisé en ce que** les fibres individuelles (12) sont constituées d'une matière plastique, d'une céramique ou de carbone et les fils individuels d'un métal ou d'un alliage métallique.

11. Procédé selon l'une quelconque des revendications 8 à 10,
**caractérisé en ce que,** avant ou après l'agencement au moines en partie des paquets de fibres ou de fils (16) dans l'étui (18) du joint étanche à balais, on effectue une coupe des paquets de fibres ou de fils (16).

12. Composant d'une turbomachine comprenant au moins un joint étanche à balais (10) selon l'une quelconque des revendications 1à 7.
